# EUROPÄISCHE PATENTSCHRIFT

(11) **EP 0 394 213 B1**
(45) Veröffentlichungstag und Bekanntmachung des Hinweises auf die Patenterteilung: **14.12.1994**
(21) Anmeldenummer: 90890098.8
(22) Anmeldetag: 04.04.1990
(51) Int. Cl.: C09K 3/14

(54) **Keramische, gesinterte Körper**
Ceramic sintered bodies
Corps céramiques frittés

(30) Priorität: 14.04.1989 AT 895/89
(43) Veröffentlichungstag der Anmeldung: 24.10.1990
(73) Patentinhaber: Treibacher Schleifmittel Aktiengesellschaft, A-9523 Landskron (AT)
(72) Erfinder: Winkler, Herwig, Dr., A-9020 Klagenfurt (AT); Janz, Peter, Dr., A-9020 Klagenfurt (AT); Gottschamel, Georg, Dr., A-9330 Treibach (AT)
(74) Vertreter: Kliment, Peter, Dipl.-Ing.

(56) Entgegenhaltungen:
- FR-A- 2 432 361
- GB-A- 982 215
- PATENT OFFICE OF JAPAN, File Supplier JAPS, Tokyo, JP; & JP-A-62 297 070

## Beschreibung

Die Erfindung betrifft einen keramischen, gesinterten Körper, insbesonders Schleifkorn auf der Basis von α-Al₂O₃.

Die Herstellung von Formkörpern auf Basis von α-Aluminiumoxid durch Sintern ist bekannt. Die Formgebung kann dabei durch Trockenpressen, Extrudieren von plastischen Massen, durch Schlickergießen oder Trocknung von eingedickten Suspensionen und dgl. erfolgen. Eine Zerkleinerung der geformten Massen vor oder nach der Sinterung führt zu scharfkantigen Körnern, die auch als Schleifkorn Verwendung finden können.

Als Rohstoffe für gesinterte Körper auf Basis α-Al₂O₃ kommen meist Oxide oder Hydroxide des Aluminiums zum Einsatz.

So beschreibt die US-PS 3 377 176 die Herstellung eines keramischen Formkörpers aus Al₂O₃ mit geringem Zusatz an Fremdoxiden, wobei als Rohstoff Tonerde mit einer Korngröße < 1 µm verpreßt wird.

Die US-PS 4 786 292 beschreibt die Herstellung eines gesinterten Schleifkorns aus einer Mischung von Tonerde und einem hochdispergierbaren α-Al-Oxidmonohydrat, wobei Zusätze von Oxiden verschiedener Metalle bis zu 1 Gew.-% angeführt werden.

Die EP-A 0 304 616 betrifft ein oberflächenbehandeltes Schleifkorn auf der Basis von Aluminiumoxid. Die Behandlung der Oberfläche kann unter anderem mit hochdispersem Al₂O₃ erfolgen. Einziges Ziel dieser Behandlung ist allerdings das Erreichen einer hohen Oberflächenleitfähigkeit durch das Aufbringen von hygroskopischen und hydrophilen Schichten. Die Beeinflussung der Härte ist in dieser Druckschrift nicht erwähnt.

Die EP-A 0 263 810 betrifft die Herstellung eines mikrokristallinen Schleifkorns auf Basis α-Al₂O₃. Dabei wird als Rohstoff ein hochdispergierbares α-Al-Oxidmonohydrat verwendet.

Die EP-A 0 293 163 beschreibt die Herstellung eines Schleifkorns aus einem Al-Oxid-Sol, welches nach der Kalzinierung zur Verbesserung der Eigenschaften einer Imprägnierung mit einer Salzlösung unterzogen wird; die verwendeten Salze sind Metallverbindungen, die sich beim nachfolgenden Erhitzen in Metalloxide umwandeln und mit der Matrix reagieren.

Die US-PS 4 007 020 behandelt ein Verfahren, um einem porösen, keramischen Körper eine höhere Festigkeit zukommen zu lassen. Dies erfolgt im wesentlichen durch Imprägnierung der porösen Struktur mit einer Lösung einer anorganischen Chromverbindung, die sich beim Erhitzen in ein Oxid umwandelt. Diese Imprägnierung wird mehrmals wiederholt, wobei als letzter Schritt auch eine Imprägnierung mit Phosphorsäure durchgeführt werden kann.

Alle diese keramischen Körper zeigen aber bei Verwendung als Schleifkorn in einer Schleifscheibe große Reaktivität mit einem glasartigen, keramischen Binder, der bei der Scheibenherstellung eingesetzt wird. Die Kornoberfläche wird beim Brennen mit dem Binder in Reaktion treten und "aufgeweicht", es tritt somit ein Härteabfall an der Kornoberfläche auf, damit verbunden ist dann eine Herabsetzung der Schleifleistung.

Aufgabe der vorliegenden Erfindung ist es ein Schleifkorn zu schaffen, das durch die Einbindung mittels eines keramischen Binders keine wesentliche Verschlechterung seiner Eigenschaften erleidet.

Ein weiteres Ziel der Erfindung ist die Verhinderung dieses Härteabfalls an der Kornoberfläche und damit verbesserte Schleifeigenschaften.

Diese Aufgaben werden dadurch gelöst, daß der mit einem glasartigen, keramischen Binder in eine Struktur eingebundene Körper einen Härteabfall von seiner Mitte bis zu seinem Rand von weniger als 1800 N/mm², vorzugsweise weniger als 1000 N/mm² und insbesonders weniger als 500 N/mm² aufweist.Gerade der Härteabfall von der Mitte des Kornes zu seinem Rand hin wurde als besonders nachteilig für die Schleifeigenschaften identifiziert. Durch die erfindungsgemäßen keramischen Körper können daher äußerst große Schleifleistungen erzielt werden. Besonders günstig haben sich hierbei Korngrößen zwischen 0,05 und 1,5 mm und insbesonders zwischen 0,2 und 1 mm herausgestellt.

Weiters betrifft die Erfindung die Verwendung eines keramischen, gesinterten Körpers zur Herstellung von Schleifscheiben o.dgl.

Erfindungsgemäß sind dabei die Körper durch einen keramischen, glasartigen Binder gebunden. Die so hergestellten Schleifscheiben erreichen höchste Schleifleistungen.

Ein anderer Aspekt der Erfindung ist ein Verfahren zur Herstellung eines keramischen Körpers auf der Basis von αAl₂O₃ durch einen Sintervorgang. Dieses Verfahren ist dadurch gekennzeichnet, daß der vorgesinterte Körper im Vakuum entlüftet wird, danach mit einer wässerigen Suspension mit einer Korngröße des Feststoffes von weniger als 0,5 µm und vorzugsweise von weniger als 0,05 µm und besonders vorzugsweise von weniger als 0,02 µm behandelt, wonach die überschüssige Suspension entfernt wird und die so behandelten Körper getrocknet und erneut gesintert werden.

Es wurde nämlich überraschenderweise festgestellt, daß durch Behandeln bereits fast dichtgesinterter Körper mit einer Suspension von hochdispergierbarem α-Al-Oxidmonohydrat die zu erwartende Härteminderung an der Kornoberfläche nach dem Brennen mit der Bindung wesentlich herabgesetzt werden kann.

Die bekannten, gesinterten, keramischen Formkörper verfügen über eine mehr oder weniger große Restporosität. Bei Verwendung dieser Körner in keramischen Schleifscheiben wirkt sich diese Restporosität ungünstig auf die Schleifeigenschaften aus. Die niedrigschmelzenden Oxide des Glasbinders bilden beim Brennen der Scheiben eine flüssige Phase und dringen in die Poren des Schleifkorns ein. Dies führt zu einem erheblichen chemischen Angriff auf das Al-Oxid in den äußeren Schichten und entlang der Korngrenzen; die Folge davon ist eine starke Härteminderung der beim Schleifen zum Eingriff kommenden Kornoberfläche.

Die Infiltration der Poren mit der Suspension, die beim Trocknen und Sintern in den Poren erhärtet, bewirkt, daß die flüssige Phase des keramischen Binders nicht mehr in das Gefüge des Korns eindringen und dieses "aufweichen" kann.

Die Infiltration kann prinzipiell an jedem gesinterten Körper durchgeführt werden, der noch offene Poren besitzt.

Als Suspension eignet sich jedes Suspension, deren Viskosität niedrig genug ist, um in Poren, deren Größe im Bereich von 0,5 - 1 µm liegt, einzudringen und die als Feststoff α-Al-Oxidmonohydrat und/oder Al-Oxid und/oder Al-Hydroxid enthält. Die Korngröße der suspendierten Partikel sollte unter 0,05 µm liegen, um ein möglichst vollständiges Ausfüllen der Poren zu gewährleisten. Auch der Zusatz von Säure zur Suspension hat sich als vorteilhaft erwiesen. Der Feststoffgehalt der Suspension liegt im Bereich von 5-30 Gew. %, vorzugsweise zwischen 10 und 25 Gew.-%.

Das Infiltrieren selbst kann durch Immersion der Körner in der Suspension mit anschließendem Abfiltrieren durch ein grobes Filter durchgeführt werden. Die Körner können auch in einem Mischer mit Suspension besprüht werden. Vorzugsweise werden die Körner dabei entlüftet, damit die Poren gut mit Suspension gefüllt werden können.

Nach der Entfernung der überschüssigen Suspension werden die Körner getrocknet. Die Gewichtszunahme kann je nach Porosität und Korngröße bis zu 15 Gew.-% betragen. Das getrocknete Produkt wird gegebenenfalls noch schonend zerkleinert, um eventuell durch Suspensionsreste zusammengeklebte Körner zu trennen. Anschließend werden die infiltrierten, getrockneten Körner bei Temperaturen zwischen 1100°C und 1400°C fertiggesintert.

Die vorliegende Oberflächenbehandlung kann wie bei Schleifkörnern auch für gesinterte Formteile, wie beispielsweise Schneidplättchen oder Verschleißteile zur Verbesserung der Oberfläche angewendet werden.

Die folgenden Beispiel sollen die Erfindung verdeutlichen, ohne jedoch als Einschränkung zu wirken.

### Beispiel 1:

Ein nach der US-PS 4 786 292 hergestelltes Schleifkorn mit einer Korngröße von 0,25 mm, welches bei 1500°C auf 90% theoret. Dichte gesintert worden war, wurde in einem luftdicht verschlossenen Topf entlüftet. Danach wurden die Körner unter Vakuum mit einer wässerigen, salpetersauren Suspension, bestehend aus 10 Gew.-% Tonerde und 10 Gew.-% dispergierbarem α-Al-Oxidmonohydrat überschichtet und belüftet. Nach ca. 30 Minuten wurde die Suspension durch ein Sieb abgegossen und die Körner bei 80°C im Trockenschrank getrocknet. Die Gewichtszunahme nach dem Trocknen betrug 6%. Die getrockneten Körner wurden dann bei 1400°C 1 Stunde gesintert.

### Beispiel 2:

Ein nach der europäischen Anmeldung 0 263 810 hergestelltes Schleifkorn (Korngröße 1 mm) wird bei 1300°C auf 95% theoret. Dichte gesintert. Die Körner wurden in einem dichtverschlossenen Gefäß entlüftet und anschließend mit einer Suspension, die 20 Gew.-% α-Al- Oxidmonohydrat und 1 Gew.-% Salpetersäure (konz.) enthielt, unter Vakuum überschichtet. Die Korngröße der suspendierten Partikel lag unter 0,02 µm Die Suspension wurde nach 30 Minuten durch ein Sieb abgegossen und die Körner im Trockenschrank bei 80°C getrocknet. Die Gewichtszunahme betrug 1,5%.

Die Körner wurden nach dem Trocknen bei 1300°C 2 Stunden fertiggesintert.

### Beispiel 3:

Ein nach der europäischen Anmeldung 0 263 810 hergestelltes Schleifkorn der Korngröße 0,4 mm wurde bei 1200°C auf 88% theoret. Dichte gesintert. Die Körner wurden in einem dichtverschlossenen Gefäß entlüftet und anschließend mit einer Suspension, die 20 Gew.-% α-Al-Oxidmonohydrat und 1 Gew.-% Salpetersäure (konz. ) enthielt, unter Vakuum überschichtet. Die Korngröße der suspendierten Partikel lag unter 0,02 µm. Die Suspension wurde nach 30 Minuten durch ein Sieb abgegossen und die Körner im Trockenschrank bei 80°C getrocknet. Die Gewichtszunahme betrug 5%. Die getrockneten Körner wurden bei 1300°C 1,5 Stunden fertiggesintert.

Die folgende Tabelle gibt den Härteabfall der eingebundenen Körner von der Kornmitte zum Kornrand in N/mm² und die Schleifleistung (= Verhältnis abgeschliffene Materialmenge zum Scheibenverschleiß) der erfindungsgemäß behandelten Schleifkörner in keramisch gebundenen Schleifscheiben an.

| Material | Härteabfall N/mm² | Schleifleistung (bez. auf Mat. ohne Behandlung) |
|---|---|---|
| US-PS Nr. 4,786,292 | 2500 | 100 |
| Beispiel 1 | 500 | 140 |
| EU-Anm. Nr. 0 263 810 | 2000 | 100 |
| Beispiel 2 | 1500 | 120 |
| Beispiel 3 | 300 | 190 |

## Patentansprüche

1. Keramischer gesinterter Körper, insbesonders Schleifkorn, auf Basis von α-Al₂O₃, **dadurch gekennzeichnet**, daß der mit einem glasartigen, keramischen Binder in eine Struktur eingebundene Körper durch eine vorhergehende Oberflächenbehandlung einen Härteabfall von seiner Mitte bis zu seinem Rand von weniger als 1800 N/mm², vorzugsweise weniger als 1000 N/mm² und insbesondere weniger als 500 N/mm² aufweist, wobei die Oberflächenbehandlung folgende Verfahrensschritte umfaßt:
- Entlüften des vorgesinterten Körpers im Vakuum,
- Behandeln des Körpers mit einer wässerigen Feststoffsuspension mit einer Feststoffkorngröße von weniger als 0,5 µm, bestehend aus feindispersem α-Al-Oxidmonohydrat und/oder Al₂O₃ und/oder Al-Hydroxid,
- Entfernen der überschüssigen Suspension,
- Trocknen und erneutes Sintern des Körpers.

2. Keramischer gesinterter Körper nach Anpruch 1, **dadurch gekennzeichnet**, daß er durch ein Schleifkorn zwischen 0,05 und 1,5 mm und insbesondere zwischen 0,2 und 1 mm gebildet wird.

3. Keramischer gesinterter Körper nach Anspruch 1 oder 2, **dadurch gekennzeichnet**, daß die Korngröße des Feststoffes der Suspension weniger als 0,05 µm, vorzugsweise weniger als 0,02 µm beträgt.

4. Keramischer gesinterter Körper nach einem der Ansprüche 1 bis 3, **dadurch gekennzeichnet**, daß der Feststoffgehalt der Suspension 5-30 Gew. -% und vorzugsweise 10-25 Gew. % (berechnet als Al₂O₃) beträgt.

5. Keramischer gesinterter Körper nach einem der Ansprüche 1 bis 4, **dadurch gekennzeichnet**, daß der Feststoffsuspension bis zu 10 Gew. % einer Säure zugesetzt werden.

6. Keramischer gesinterter Körper nach Anspruch 5, **dadurch gekennzeichnet**, daß als zugesetzte Säure Salpetersäure oder Essigsäure verwendet wird.

7. Keramischer gesinterter Körper nach einem der Ansprüche 1 bis 6, **dadurch gekennzeichnet**, daß die Gewichtszunahme des Körpers durch die Behandlung mit einer Feststoffsuspension 0,5 bis 10 %, vorzugsweise 1 bis 6 % ausmacht.

8. Keramischer gesinterter Körper nach einem der Ansprüche 1 bis 7, **dadurch gekennzeichnet**, daß das Sintern der mit der Feststoffsuspension behandelten Körper bei Temperaturen zwischen 1100°C und 1400°C während 15 Minuten bis 4 Stunden durchgeführt wird.

9. Verwendung eines keramischen gesinterten Körpers nach einem der Ansprüche 1 bis 8 zur Herstellung von Schleifscheiben o.dgl., **dadurch gekennzeichnet**, daß die Körper durch einen keramischen, glasartigen Binder gebunden sind.

## Claims

1. A ceramic sintered body, in particular abrasive grain, based on α-Al₂O₃, characterized in that the body, which is bound into a structure by means of a glass-like ceramic binder, is provided with a drop in hardness from its centre to its edge of less than 1800 N/mm², preferably less than 1000 N/mm², and in particular less than 500 N/mm², owing to a surface treatment carried out previously, with the surface treatment comprising the following process steps:
- deaeration of the presintered body in a vacuum;
- treatment of the body with a hydrous solids suspension with a solids grain size of less than 0.5 µm, consisting of a highly dispersable α-Al-oxide monohydrate and/or Al₂O₃ and/or Al-hydroxide;
- the removal of the excess suspension;
- the drying and renewed sintering of the body.

2. A ceramic sintered body as claimed in claim 1, characterized in that said body is formed by an abrasive grain of between 0.05 and 1.5 mm and, in particular, between 0.2 and 1 mm.

3. A ceramic sintered body as claimed in claim 1 or 2, characterized in that the grain size of the solids of the suspension is less than 0.05µm, preferably less than 0.02µm.

4. A ceramic sintered body as claimed in one of the claims 1 to 3, characterized in that the solids content of the suspension is 5 to 30 weight percent and preferably 10 to 25 weight percent (calculated as Al₂O₃).

5. A ceramic sintered body as claimed in one of the claims 1 to 4, characterized in that the solid matter suspension is added up to 10 weight percent of an acid.

6. A ceramic sintered body as claimed in claim 5, characterized in that nitric acid or acetic acid is used as acid that is added.

7. A ceramic sintered body as claimed in one of the claims 1 to 6, characterized in that the weight increase of the body, due to the treatment with solid matter suspension, amounts to 0.5 to 10 percent, preferably 1 to 6 percent.

8. A ceramic sintered body as claimed in one of the claims 1 to 7, characterized in that the sintering of the bodies treated with the solid matter suspension is carried out at temperatures of between 1100°C and 1400°C during a period ranging from 15 minutes up to 4 hours.

9. The application of a ceramic sintered body in accordance with one of the claims 1 to 8 for producing abrasive discs or the like, characterized in that the bodies are bound by a ceramic glass-like binder.

## Revendications

1. Corps céramique fritté, notamment grain abrasif à base de Al₂O₃-α, caractérisé en ce que le corps incorporé à l'aide d'un liant céramique vitreux dans une structure présente, grâce à un traitement préalable de sa surface, une diminution de dureté, de son milieu jusqu'à son bord, inférieure à 1800 N/mm², avantageusement inférieure à 1000 N/mm² et en particulier inférieure à 500 N/mm², le traitement de surface comprenant les étapes opératoires suivantes :
- désaérage du corps préfritté sous vide,
- traitement du corps par une suspension aqueuse de solides ayant une grosseur de grain solide inférieure à 0,5 µm, consistant en du monohydrate d'oxyde de Al-α finement dispersé et/ou en Al₂O₃ et/ou en de l'hydroxyde de Al,
- élimination de l'excès de la suspension;
- séchage et frittage à nouveau du corps.

2. Corps céramique fritté selon la revendication 1, caractérisé en ce qu'il est formé par un grain abrasif de diamètre compris entre 0,05 et 1,5 mm et en particulier entre 0,2 et 1 mm.

3. Corps céramique fritté selon la revendication 1 ou 2, caractérisé en ce que la grosseur des grains du solide de la suspension est inférieure à 0,05 µm, avantageusement inférieure à 0,02 µm.

4. Corps céramique fritté selon l'une des revendications 1 à 3, caractérisé en ce que la teneur en solides de la suspension est de 5 à 30 % en poids et avantageusement de 10 à 25 % en poids (calculée en Al₂O₃).

5. Corps céramique fritté selon l'une des revendications 1 à 4, caractérisé en ce qu'à la suspension des solides a été ajoutée une proportion, allant jusqu'à 10 % en poids, d'un acide.

6. Corps céramique fritté selon la revendication 5, caractérisé en ce qu'on utilise comme acide ajouté l'acide nitrique ou l'acide acétique.

7. Corps céramique fritté selon l'une des revendications 1 à 6, caractérisé en ce que l'augmentation de poids du corps, par suite du traitement par une suspension de solides, est de 0,5 à 10 %, avantageusement de 1 à 6 %.

8. Corps céramique fritté selon l'une des revendications 1 à 7, caractérisé en ce que le frittage des corps traités par la suspension de solides est réalisé à des températures comprises entre 1100°C et 1400°C pendant 15 minutes à 4 heures.

9. Utilisation d'un corps céramique fritté selon l'une des revendications 1 à 8 pour produire des disques d'affûtage ou des meules, ou des objets analogues, utilisation caractérisée en ce que les corps sont liés à l'aide d'un liant céramique vitreux.
